**Europäisches Patentamt**

**European Patent Office**

**Office européen des brevets**

(11) Veröffentlichungsnummer: **0 136 373**

**A1**

(12) # EUROPÄISCHE PATENTANMELDUNG

(21) Anmeldenummer: **83110022.7**

(22) Anmeldetag: **06.10.83**

(51) Int. Cl.⁴: **E 21 B 21/06**
**B 01 D 12/00**

(43) Veröffentlichungstag der Anmeldung:
**10.04.85  Patentblatt  85/15**

(84) Benannte Vertragsstaaten:
**AT BE CH DE FR GB IT LI LU NL SE**

(71) Anmelder: **FLOTTWEG-WERK DR. GEORG**
**BRUCKMAYER GMBH & CO. KT**
**Schliessfach 1160**
**D-8313 Vilsbiburg(DE)**

(72) Erfinder: **Jäger, Ernst-Adolf, Dr.-Ing.**
**Benefiziat-Vest-Strasse 36**
**D-8313 Vilsbiburg(DE)**

(72) Erfinder: **Karlsen, Karl W.**
**Forane 1A**
**Forus(NO)**

(74) Vertreter: **Flügel, Otto, Dipl.-Ing. et al,**
**Dipl.-Ing. Otto Flügel Dipl.-Ing. Manfred Säger**
**Patentanwälte Cosimastrasse 81 Postfach 810 540**
**D-8000 München 81(DE)**

(54) Verfahren zum Waschen von gröberen Bohrgutpartikeln.

(57) Verfahren zum Waschen von gröberen Partikeln erbohrten Gutes, das mit Hilfe einer Bohrspülung auf Ölbasis aus der Bohrung ausgetragen wird, welche über ein Schüttelsieb od. dgl. ersten Separator für das Ausscheiden gröberer Partikel, sogenannter entsprechend groß bemessener Cuttings, gegeben wird, wonach diesen ausgesiebten Cuttings Dieselöl od. dgl. Aufschließmittel für das Aufschließen von die Cuttings umgebenden, aus Spülung bestehenden Hüllen beigemischt wird, worauf die derart vorbehandelten Cuttings in einem nachfolgenden Vorgang mittels einer Waschflüssigkeit deponierfähig gesäubert werden, wobei zur gründlicheren Durchführung dieser Vorgänge und insbesondere zum Zwecke einer einfacheren, betriebssichereren und kostengünstigeren Gestaltung der dafür erforderlichen Einrichtungen derart verfahren wird, daß die Vorbehandlung mit Dieselöl und/oder die Behandlung mit Waschflüssigkeit in zwei aufeinanderfolgend durchlaufenen Behandlungsstrecken durchgeführt wird, deren jede sich entlang einer Wandung eines Raumes erstreckt, die quer zur Behandlungsstreckenrichtung bewegt wird, in deren erster die angelieferten Cuttings mit Dieselöl bzw. Waschflüssigkeit durchmischt werden und in deren zweiter, darauffolgender Strecke derart behandelten Cuttings von der Behandlungsflüssigkeit - Dieselöl bzw. Waschflüssigkeit - getrennt werden.

Croydon Printing Company Ltd.

EP 0 136 373 A1

0136373
11.964

Die Erfindung bezieht sich auf ein Verfahren mit den Merkmalen des Oberbegriffes des Anspruches 1 und eine Anlage zur Durchführung des Verfahrens.

Die durch den Bohrvorgang anfallenden, mit Hilfe der Bohrspülung aus dem Bohrloch herausgeförderten, erbohrten Feststoffe fallen in unterschiedlicher Größenordnung an. In der Regel wird die das erbohrte Gut mitführende Bohrspülung zunächst auf ein Schüttelsieb geleitet, das die großvolumigeren Teile des erbohrten Gutes aus der Bohrspülung abtrennt, in der feinere bis kleinste Teilchen des erbohrten Gutes verbleiben. Die Partikel des erbohrten Gutes kann man in ihrer Gesamtheit als Cuttings bezeichnen. Hier werden die gröberen Partikel, die von dem Schüttelsieb aus der Bohrspülung, in der die kleineren Partikel verbleiben, getrennt werden, Cuttings genannt. Aufgrund der Affinität der auf Ölbasis beruhenden Bohrspülung zu Mineralien werden die Cuttings von der Bohrspülung hüllenförmig umschlossen, so daß den ausgesiebten Cuttings noch verhältnismäßig große Anteile von Bohrspülung anhaften. Diese Cuttings eignen sich daher noch nicht zur Deponie. Sie müssen einer Reinigung unterzogen werden. Um die vorerwähnte Hülle aufzuschließen, werden die umhüllten Cuttings zunächst einer Behandlung mit Dieselöl ausgesetzt, und zwar in einem Dieselöl enthaltenden Behälter, in welchem sich ein Rührwerk befindet, das das Dieselöl und die zugegebenen, umhüllten Cuttings einer entsprechenden Durchmischung unterzieht. Soweit andere Aufschließungsmittel als Dieselöl verwendung finden bzw. erforderlich sind, die ähnlich wirksam sind, beispielsweise auch Paraffinöl, steht der Ausdruck "Dieselöl" hier stellvertretend für solche Mittel. Die derart vorbehandelten Cuttings werden dann in einen Waschbehälter übergeleitet, in welchem die aufgeschlossenen und zusätzlich mit Dieselöl behafteten Cuttings einer Waschflüssigkeit ausgesetzt werden. Auch in diesem Behälter wird wiederum gerührt und entsprechend intensiv durchmischt. Die derart gewaschenen Cuttings sind nun fast frei von Rückständen aus Bohrspülung bzw. Dieselöl und werden

Flottweg-Werk       –2–                    11.964
Dr. Georg Bruckmayer GmbH & Co. KG


in dieser Form deponiert.

Die in diesem Zusammenhang für die Dieselöl-Behandlung und
das Waschen verwendeten Behälter - zylindrisch mit halbrundem Boden - neigen zu dauerhaften Feststoffablagerungen
in weniger durchspülten Bereichen. Es ist ein verhältnismäßig aufwendiges Rührwerk erforderlich. Das Absaugen der
behandelten Cuttings mit Hilfe von Pumpen durch Rohrleitungen
ist diffizil.

Der Erfindung liegt die Aufgabe zugrunde, das Verfahren der
eingangs genannten Art effektiver und insbesondere hinsichtlich der erforderlichen Einrichtungen einfacher, betriebssicherer und kostengünstiger zu gestalten.

Die Aufgabe wird erfindungsgemäß durch das Verfahren gemäß
Anspruch 1 gelöst.

Durch die Förderung der Cuttings über die Behandlungsstrecken
hinweg entlang der quer dazu bewegten Wandung des jeweiligen
Raumes werden die Cuttings einem Umwälzvorgang unterzogen,
der eine intensive Durchmischung des Aufschließmittels mit
den Cuttings bzw. eine intensivere Trennung der Waschflüssigkeit von den Cuttings zur Folge hat, ohne daß sich
apparativ bedingt Zonen unterschiedlicher Behandlungsintensität ergeben.

Die erfindungsgemäße Art des Vorgehens erlaubt den Einsatz
wesentlich einfacherer und zuverlässigerer Geräteausbildungen,
als dies beim Stand der Technik der Fall ist. In bevorzugter
Ausführung werden der bzw. den Behandlungsstufen Dekantiervorgänge beigegeben, die die verwendeten Behandlungsflüssigkeiten reinigen und in den Behandlungsvorgang zurückführen.

Flottweg-Werk     -3-     11.964
Dr. Georg Bruckmayer GmbH & Co. KG

Die in der vorgeschlagenen Anlage zur Durchführung des erfindungsgemäßen Verfahrens verwendeten Geräte, die die erste
und zweite Strecke bilden, können erfindungsgemäß auf mancherlei Weise ausgebildet sein. So können die die Streckenräume
umfassenden Wandungen jeweils für sich um ihre Längsachse
rotierend ausgebildet sein, und zwar lediglich derart einander zugeordnet, daß sie im Bereich des Übertrittes miteinander in Verbindung stehend oder in Verbindung bringbar
sind.

Um einen Transport zu erleichtern bzw. sicherzustellen,
können die Mäntel entsprechend schräg verlaufend ausgebildet sein, beispielsweise durch Schrägstellen zylindrischer
Mäntel oder durch konische oder teilkonische Ausbildung
derart, daß das unter Schwerkraft auf den Bodenbereich der
Mantelwandung gelangende Gut in Richtung der konischen Verbreiterung bewegt wird. Zusätzlich oder ausschließlich kann
man in die von den Mänteln umfaßten Räume Misch- und Förderwerkzeuge einbringen, beispielsweise Räumer- bzw. Förderschnecken.

In bevorzugter Ausführung sind die Mäntel einander koaxial
zugeordnet und haben eine gemeinsame Antriebsachse. Die
erste Strecke verläuft dabei innerhalb eines achsnahen
Mantels, während die zweite Strecke im hohlzylindrischen Bereich zwischen dem Mantel des ersten Raums und dem Siebmantel des zweiten Raumes gelegen ist.

In anderer Ausführung sind die Mäntel um eine gemeinsame
Achse in Achsrichtung einander nachgeordnet. Dabei können
Misch- und Räum- bzw. Förderwerkzeuge einheitlich, beispielsweise als Schnecke, ausgebildet sein.

Flottweg-Werk       —4—          11.964
Dr. Georg Bruckmayer GmbH & Co. KG


In bevorzugter Ausführung werden beide Mäntel mit derselben Umdrehungszahl rotiert. Soweit Misch- und Räum- bzw.
Förderwerkzeuge vorgesehen sind, können diese besonders
bevorzugt ebenfalls mit derselben Umdrehungszahl wie die
Mäntel umlaufen, so daß sich eine kompakte, untereinander
unbewegliche Einheit ergibt, die auf einfachste Weise nur
ein Antriebsaggregat benötigt. Es lassen sich aber auch
unterschiedliche Drehzahlen, insbesondere für die Werkzeuge
und hier vor allem dasjenige der ersten Behandlungsstrecke,
einbringen, wenn dies aus Gründen der Durchmischung bzw.
der Fördermenge pro Zeiteinheit zweckdienlich erscheint.

Durch Aufbringen translatorischer und/oder rotatorischer
Vibration kann man die Förderung der Cuttings über die Behandlungsstrecken hinweg unterstützen. Auch lassen sich
dadurch die Behandlung verbessern und die Siebporen besser
freihalten.

Weitere Ausführungen der Erfindung ergeben sich aus Unteransprüchen in Verbindung mit den in der Zeichnung wiedergegebenen Ausführungsbeispielen, auf die besonders Bezug genommen wird und deren nachfolgende Beschreibung die Erfindung näher erläutert.

Es zeigen:

Figur 1     ein Ausführungsbeispiel mit je einer trommel-
            förmigen Behandlungseinrichtung für die Vorbe-
            handlung mit Dieselöl und die Behandlung mit
            Waschflüssigkeit, die beide aus zwei sich einander
            konzentrisch umgreifenden, zylindrischen Mänteln
            bestehen;

Figur 2      ein weiteres, prinzipielles Ausführungsbeispiel
             einer Behandlungseinrichtung mit um getrennte,
             horizontal verlaufende Achsen umlaufenden Mänteln,
             die nur hinsichtlich des Übertritts von der
             ersten in die zweite Behandlungsstrecke einander
             zugeordnet sind;

Figur 3      ein drittes, ebenfalls prinzipielles Ausführungsbeispiel, bei dem die Mäntel ähnlich Figur 2
             aber um schräg zur Horizontalen verlaufende Achsen
             angeordnet sind und keine Räum- bzw. Förderwerkzeuge aufweisen;

Figur 4      ein viertes Ausführungsbeispiel einer Behandlungseinrichtung, bei welchem die beiden Mäntel sich
             jeweils in Durchtrittsrichtung entlang der Behandlungsstrecke konisch verjüngen und um eine
             gemeinsame Achse in Achsrichtung aufeinanderfolgend angeordnet sind.

Figur 5      ein fünftes Ausführungsbeispiel, bei welchem
             die beiden Mäntel ähnlich Figur 4 konisch ausgebildet aber einander umfassend angeordnet
             sind.

Figur 6      ein letztes Ausführungsbeispiel einer Behandlungs-
             einrichtung gemäß Figur 1, jedoch mit gesondertem
             Antrieb für das Räumwerkzeug.


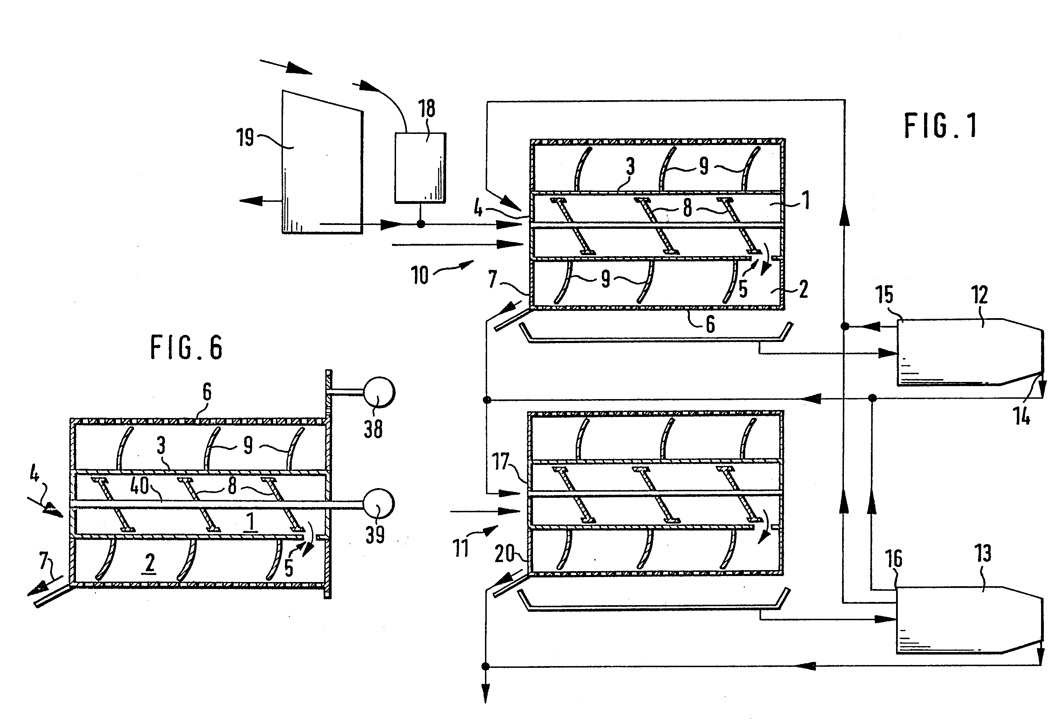

In dem Ausführungsbeispiel nach Figur 1 sind insgesamt
zwei trommelförmige Behandlungseinrichtungen wiedergegeben,
deren erste 10 die Behandlung der mit Hüllen aus Bohrspülung
plus kleineren Feststoffteilchen versehenen Cuttings mit

Dieselöl zum Zwecke des Aufschließens der Hüllen durchführt, während in der zweiten, insoweit identisch ausgebildeten Behandlungseinrichtung 11 die Behandlung der vorbehandelten Cuttings mit Waschflüssigkeit erfolgt.

In beiden Behandlungseinrichtungen 10 und 11 ist die erste der beiden aufeinanderfolgenden Behandlungsstrecken 1 innerhalb eines zylindrischen Rohres mit geschlossenem Mantel 3 ausgebildet. Der von dem Mantel 3 umschlossene zylindrische Raum ist im in der Zeichnung linken axialen Endbereich mit einem Eingang 4 für Cuttings versehen, die aus einer mit erbohrtem Gut belasteten Bohrspülung abgeschieden sind. Im anderen, rechten Endbereich des von dem Mantel 3 umschlossenen Raumes ist bei 5 ein Übertritt angedeutet, durch welchen durch den Eingang 4 eingegebene Cuttings die Behandlungsstrecke 1 verlassen und in die Behandlungsstrecke 2 übertreten. Die Strecke 2 ist innerhalb eines hohlzylindrischen Raumes ausgebildet, der von dem vorerwähnten Mantel 3 und einem diesen mit Abstand umgebenden Siebmantel 6 begrenzt ist. Die in die Behandlungsstrecke 2 übertretenden Cuttings gelangen an deren Ende an einen Ausgang 7, durch welchen die Cuttings der zweiten Behandlungseinrichtung 11 für die Waschbehandlung zugeführt sind.

Im vorliegenden Ausführungsbeispiel umschließen der Mantel 3 einen zylindrischen ersten Raum und der Siebmantel 6 einen hohlzylindrischen zweiten Raum, die koaxial zueinander liegen. Innerhalb des Mantels 3 sind Räumwerkzeuge 8 vorgesehen, während im hohlzylindrischen Zwischenraum zwischen dem Mantel 3 und dem Siebmantel 6 eine Förderschnecke 9 angeordnet ist. Da in dem von dem Mantel 3 umschlossenen ersten Raum über die erste Behandlungsstrecke 1 hinweg die umhüllten Cuttungs einer Dieselöl-Behandlung ausgesetzt werden, dienen die innerhalb des flüssigkeitsdicht ausgebildeten Mantels 3 angeordneten Räumwerkzeuge 8 der intensiven Durchmischung der Cuttings mit Dieselöl, woraufhin sich die Umhüllungen aufschließen. Die Räumwerkzeuge 8 befördern zugleich diese Suspension vom Eingang 4 in Richtung des Übertrittes 5, weil sich das gesamte Gebilde aus dem Mantel 3, dem Siebmantel 6, den Räumwerkzeugen 8 und der Förderschnecke 9 um seine Längsachse angetrieben dreht. Aufgrund der Anordnung mit etwa horizontal liegender Drehachse sind die Förderwerkzeuge fest an den Mänteln gehalten, weshalb sich das zu fördernde Gut unter Schwerkraft entlang der Räumfahrzeuge bzw. Förderschnecke axial bewegt.

Nach Durchlaufen der ersten Behandlungsstrecke werden die Cuttings mit aufgeschlossenen Umhüllungen in den die Förderschnecke 9 aufweisenden zweiten Behandlungsraum 3 überführt, worauf die Flüssigphase, d.h. hier alle Teile, die kleiner als die Cuttings sind, durch den Siebmantel nach außen abfließen. Diese Teile werden aufgefangen und dem Eingang eines Zwei-Phasen-Dekanters 12 zugeführt. Die Flüssigphase dieses Dekanters enthält Dieselöl, das durch den Ausgang 15 entnommen und zusammen mit neu angelieferten Cuttings im Bereich des Einganges 4 zu Beginn der Behandlungsstrecke 1 wieder eingespeist wird. Die Feststoff-Phase des Dekanters 12 wird mit dem Ausgang 7 der Behandlungsstrecke 2 der Einrichtung 10 zusammengeführt und dem Eingang 17 der zweiten Behandlungseinrichtung 11 zugeleitet. In der ersten Behandlungsstrecke dieser zweiten Behandlungseinrichtung 11 werden die mit Dieselöl aufgeschlossenen Cuttings mit Waschflüssigkeit gut durchmischt und durchwandern dabei die Strecke 1 zwischen dem Eingang 17 und dem Übertritt 5, durch welchen sie in die zweite Behandlungsstrecke 2 übertreten. Die Anordnung der Räumer 8 und der Förderschnecke 9 ist hier identisch oder doch ähnlich vorgenommen wie bei der Einrichtung 10. Es wurden daher auch insoweit dieselben Bezugsziffern verwendet.

Die gewaschenen Cuttings werden in der Behandlungsstrecke 2

0136373

Flottweg-Werk     -8-     11.964
Dr. Georg Bruckmayer GmbH & Co. KG

dadurch von der Waschflüssigkeit, die Dieselöl und Feststoff
mitführt, getrennt, daß die Waschflüssigkeit durch die Wandung
des Siebmantels 6 abfließt. Die gereinigten Cuttings gelangen
durch den im linken Endbereich der zweiten Behandlungsstrecke
vorgesehenen Ausgang 20 auf den Weg zur Deponie.

Der Behandlungseinrichtung 11 für das Waschen der Cuttings ist
ein Drei-Phasen-Dekanter für die Aufbereitung der Waschflüssigkeit und Wiedergewinnung von Dieselöl zugeordnet. Die durch
den Siebmantel 6 tretende Suspension wird in den Dekanter 13
in eine feste Phase, eine Phase schwererer und eine Phase
leichterer Flüssigkeit separiert. Die Feststoffphase wird der
Deponie zugeleitet, die leichtere Flüssigkeitsphase, die Dieselöl enthält, wird in den ersten Raum der Behandlungseinrichtung 10 eingespeist, und zwar unter Zusammenfassung mit
dem Ausgang 15 des Zweiphasen-Dekanters 12, während die die
schwerere Flüssigkeitsphase bildende gereinigte Waschflüssigkeit dem Eingang 17 der zweiten Behandlungseinrichtung 11 wieder zugeführt wird, also zusammen mit den Feststoffen aus der
zweiten Behandlungsstrecke der ersten Einrichtung 10 und des
Feststoff-Austrages 14 des Dekanters 12.

Um keine zu großen Partikelunterschiede in dem Bereich der
groben Feststoffpartikel zu haben, die hier Cuttings genannt
werden, ist dem Eingang 4 der Behandlungseinrichtung 10 ein
Brechwerk 18 vorgeschaltet, das die ihm zugeführten Cuttings
auf eine bestimmte Höchstgrößenordnung beschränkt. Vor dem
Brechwerk 18 ist ein Schüttelsieb 19 angeordnet, das nur die
für die Brechung entsprechend großen Cuttings zu dem Brechwerk 18 durchläßt, während kleinere Partikel an dem Brechwerk 18 vorbei dem Eingang 4 direkt zugeführt werden.

In nicht dargestellter Weise sind den Behandlungseinrichtungen
10 und/oder 11 bevorzugt Vibrationseinrichtungen zugeordnet, die axiale und/oder radiale Vibrationsbewegungen auf die Behandlungseinrichtungen bzw. insbesondere die Mäntel 3 und 6 übertragen. Solche Vibrationen können die Abförderung der Cuttings verbessern bzw. die bessere Aussiebung der Flüssigphase bewirken, und zwar unter gleichzeitiger Sauberhaltung der Siebe.

In nicht dargestellter Weise können die Siebtrommeln der Behandlungseinrichtungen 10 und 11 oder je nach Bedarf auch nur einer von ihnen einer Säuberungseinrichtung zugeordnet sein, für deren Ausbildung es verschiedene Möglichkeiten gibt. So kann man eine auf die Siebmantelwandung gerichtete Spritzdüseneinrichtung, die mit unter Druck stehendem Wasser gespeist wird, vorsehen oder auch eine an dem Siebmantel angreifende Bürsteneinrichtung, insbesondere eine solche mit rotierenden Bürsten. Eine solche Säuberungseinrichtung kann auch nur mit Druckluft arbeiten oder eine Kombination aus solchen Säuberungseinrichtungen aufweisen.

Die vorstehenden Ausführungen über die Vibrationseinrichtung und die Säuberungseinrichtung gelten auch für die nachstehend abgehandelten Ausführungsformen der Behandlungseinrichtungen.

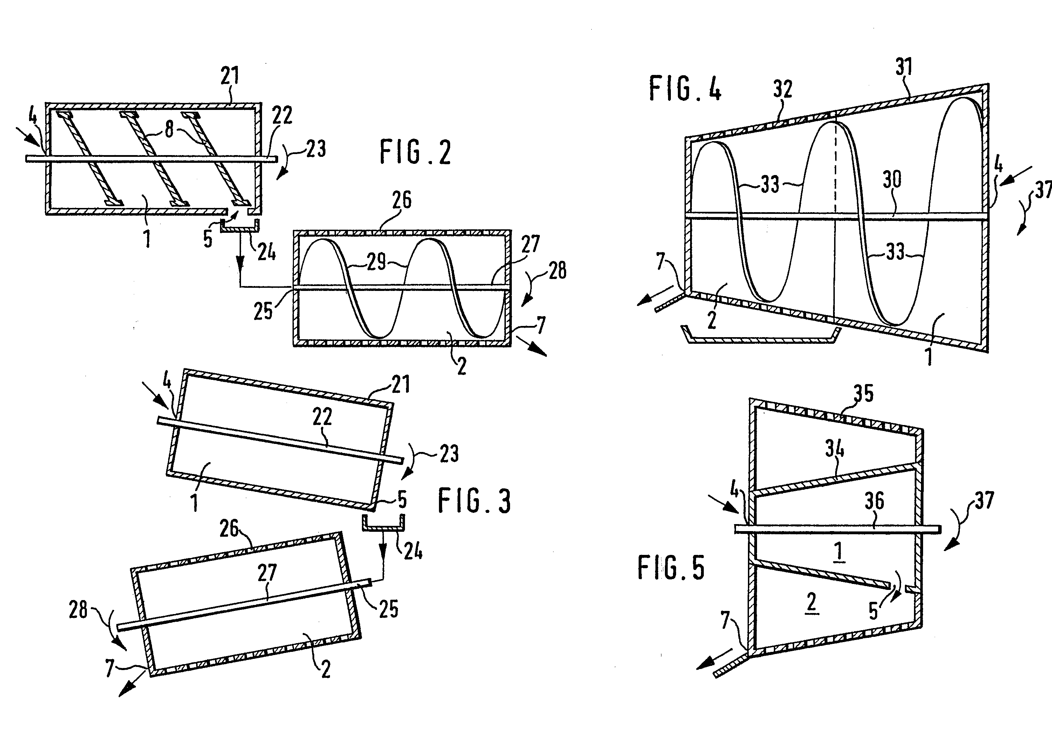

in den Figuren 2 bis 5 sind verschiedene Ausführungsformen einer Behandlungseinrichtung in ihrer prinzipiellen Anordnung bzw. ihrem grundsätzlichen Aufbau wiedergegeben und an Hand des Einsatzes für die Dieselölbehandlung nachstehend erläutert.

Fig. 2 zeigt eine insoweit getrennte Anordnung des die Behandlungsstrecke 2 beherbergenden, zylindrischen, dicht ausgebildeten Mantels 21, der um seine Achse 22 rotierend angetrieben gelagert ist. Der Eingang 4 für die Cuttings und das Dieselöl entspricht demjenigen der Ausführung nach Figur 1 als in geeigneter Weise gestaltete, nicht darge-

Flottweg-Werk                    - 10 -                    11.964
Dr. Georg Bruckmayer GmbH & Co. KG

stellte Öffnung im entsprechenden stirnseitigen Abschluß
des Mantels. Gleiches gilt für das schematisch wiedergegebene Räumwerkzeug 8 und den Obertritt 5, der ebenfalls
nur der Funktion nach wiedergegeben ist und beispielsweise
aus über den Mantelumfang verteilt angeordneten Öffnungen
in diesem Endbereich des Mantels bestehen kann. Die Achse 22,
an der der Mantel 21 und das Räumwerkzeug 8 verdreh- und verschiebefest gehalten sind, wird in Richtung des Pfeiles 23
von einem nicht dargestellten Antriebsaggregat rotierend
angetrieben.

Die Obertrittsöffnung 5 mündet in eine Übernahmewanne 24,
von der aus die Cuttings mit dem Dieselöl und den Bestandteilen der aufgeschlossenen Hüllen dem ähnlich wie Eingang 4
gestalteten Eingang 25 des die zweite Behandlungsstrecke 2
beinhaltenden, kreiszylinderförmigen Siebmantel 26 zugeführt
werden, der hier als gesondertes Behältnis ausgebildet ist
und eine eigene Achse 27 aufweist, die mittels eines nicht
dargestellten weiteren Antriebsaggregates - oder je nach
räumlicher Zuordnung mittels eines von dem ersten Antriebsaggregat abgeleiteten Drehmomentes - im Drehsinn des
Pfeiles 28 rotiert wird. An der Achse 27 sind verschiebe-
und verdrehfest der Siebmantel 26 und eine Förderschnecke
29 gehalten, welch letztere hier direkt an der Achse 27
bzw. dem Siebmantel 26 und nicht wie beim Beispiel gemäß
Fig. 1 zwischen dem geschlossenen Mantel und dem Siebmantel befestigt ist. Die Förderschnecke 29 bewegt das bei
25 eingegebene Gut über die Behandlungsstrecke 2, wobei
die Flüssigphase durch den Siebmantel 26 abgeführt wird,
während die Festphase durch den Ausgang 7 abtransportiert
wird, wie dies im Zusammenhang mit Fig. 1 beschrieben ist.
Selbstverständlich kann auch hier der Dekanter 12 gemäß
Fig. 1 zur Aufbereitung der Flüssigphase angeschlossen werden.

Fig. 3 zeigt eine Ausführungsform, die - wie diejenige
gemäß Fig.2 - mit jeweils kreiszylindrisch ausgebildetem
Mantel 21 und Siebmantel 26 arbeitet, die jeweils an eigenen Achsen 22 und 23 befestigt und insoweit getrennt
antreibbar und angeordnet sind. Die Achsen 22 und 23
sind jedoch zur Horizontalen geneigt angeordnet, so daß
sich für die entlang der Behandlungstrecken 1 und 2 zu
bewegenden Cuttings nebst der zugesetzten Flüssigkeit etc.
von dem jeweiligen Eingang 4 bzw. 25 zu dem Übertritt 5
bzw. 7 schräg nach unten gerichtete Bewegungsbahnen ergeben, deren Neigung in Anpassung an die Fließfähigkeit
des Gemisches aus Cuttings und Flüssigkeit etc. so bemessen ist, daß das Gemisch unter der Schwerkraft in der
vorbestimmten Durchsatzgeschwindigkeit die Behandlungsstrecken durchläuft. Deshalb fehlen in der Behandlungsstrecke 1 bzw. dem Mantel 21 das Räumwerkzeug und in der
Behandlungsstrecke 2 bzw. dem Siebmantel 26 die Förderschnecke. Auch hier ist die räumliche Zuordnung zwischen
dem Mantel 21 und dem Siebmantel 26 annähernd beliebig
und insoweit nur durch die Leitung zwischen der Übernahmewanne 24 und dem Eingang 25 bestimmt. Aufgrund des fehlenden Räumwerkzeugs kann der Übertritt 5 im randnahen
Bereich der diesbezüglichen Stirnseite des den Mantel 21
aufweisenden Behältnisses vorgesehen sein.

Fig. 4 zeigt eine Ausführungsform mit zwei konischen
Mänteln, die eine gemeinsame Rotationsachse 30 aufweisen,
an der sie in Achsrichtung aufeinanderfolgend gegen Verschiebung und Verdrehung gesichert festgelegt sind. Der
die Behandlungsstrecke 1 umfassende, undurchlässige Mantel
31 und der in Achsrichtung sich daran anschließende, die
Behandlungsstrecke 2 umfassende Siebmantel 32 bilden dabei
einen insoweit einheitlichen konischen Trommelmantel, in dessen Innenraum eine beiden Mänteln 31 und 32 gemeinsam bzw. durchgehend zugeordnete Förderschnecke 33
angeordnet ist, deren radiale Wendelabmessung der konischen Innenfläche des Trommelmantels angepaßt ausgebildet ist. Dabei verläuft die Konizität des Trommelmantels derart, daß sich der Trommelmantel von der dem Eingang 4 für die Cuttings und die Aufschließflüssigkeit
her gesehen zu dem Ausgang 7 für die Cuttings etc. hin
verengt.In der dargestellten horizontalen Lage der Achse
30 werden also die Cuttings mit der Behandlungsflüssigkeit mit Hilfe der Schnecke 33 entgegen der Schwerkraft
schräg aufwärts durch die Behandlungsstrecken 1 und 2 gefördert, wobei im ersten Abschnitt mit dem geschlossenen
Mantelteil 31 das Aufschließen der Cuttings-Hüllen mit
Dieselöl erfolgt, während im darauffolgenden zweiten Abschnitt mit dem Siebmantelteil 32 das Absondern der Flüssigphase durch das Sieb erfolgt und die Festphase schließlich den Ausgang 7 erreicht. Die Mäntel 31 und 32 sowie
die Schnecke 33 bilden eine Einheit mit der Achse 30.
Es bedarf daher nur eines hier nicht dargestellten Rotationsantriebes, der die Behandlungseinrichtung um die Achse 30
im Sinne des Pfeiles 37 dreht.

Figur 5 zeigt eine Ausführungsform mit zwei konischen
Mänteln 34 und 35, die wie bei den Beispielen nach den
Figuren 1 und 4 um eine gemeinsame Achse 36 angeordnet und
an dieser festgelegt sind, welche im Sinne des Pfeils 37
in nicht dargestellter Weise antreibbar ist. Die Mäntel 34
und 35 sind koaxial einander umfassend angeordnet, und zwar
hinsichtlich ihrer konischen Verengung gegenläufig. Der
innenliegende, geschlossen ausgebildete Mantel 34 weist
an seinem konisch engen Stirnbereich den Eingang 4 auf und
erweitert sich bis zu dem Übertritt 5, der in den konisch
engeren Endbereich des außenliegenden Siebmantels 35 mündet, während der konisch weitere Endbereich des Siebmantels 35
den Ausgang 7 aufweist. Auf diese Weise bewegt sich das
zu behandelnde Gut jeweils in der Behandlungsstrecke 1 innerhalb des inneren konischen Mantels 34 und nach Passieren
des Übertritts 5 entlang der Behandlungsstrecke 2 zwischen
dem Mantel 34 und dem Siebmantel 35 bei horizontaler Lage
der gemeinsamen Achse 36 auf nach unten geneigter Bahn,
wodurch die Förderung entsprechend der nach Konsistenz des
Gutes und Durchsetzmenge pro Zeiteinheit gewählten Konizität
unter Schwerkraft erfolgt. Deshalb sind innerhalb bzw.
zwischen den Mänteln keine Räum- und/oder Förderwerkzeuge
vorgesehen.

Die vorgeschilderten Ausführungsbeispiele lassen sich in
vielfältiger Weise kombinieren, wie man ohne weitere Ausführung erkennt, und sie lassen sich sowohl in der Funktion
der Behandlungseinrichtung 10 - Vorbehandlung mit Dieselöl - als auch in derjenigen der Behandlungseinrichtung 11 -
Waschbehandlung - gemäß Figur 1 einsetzen und mit den dort
wiedergegebenen Dekantern 12 bzw. 13 ergänzen.

Figur 6 zeigt eine Ausführungsform der in Figur 1 wiedergegebenen Behandlungseinrichtungen, bei der zwei Antriebsaggregate 38 und 39 vorgesehen sind, um zum einen die
Mäntel 3 und 6 mit dazwischen angeordneter Förderschnecke 9
- Antrieb 38 - und zum anderen das Räumwerkzeug 8 - Antrieb 39 - mit unterschiedlichen Drehzahlen um die Achse 40
rotieren zu lassen. Damit hat man es in der Hand, die
Mischung bzw. Waschung innerhalb des Mantels 3 intensiver
zu gestalten und/oder die Fördermenge pro Zeiteinheit dem
unterschiedlichen Volumen der Behandlungsstrecken anzupassen bzw. die Behandlungsdauer innerhalb der beiden Behandlungsstrecken unterschiedlich zu gestalten, je nach

0136373

den Erfordernissen bei räumlich gleichlangen Behandlungsstrecken. Dieses Beispiel läßt sich abwandeln, beispielsweise durch eigenen Antrieb der Schnecke 9 und des Mantels 3
etc.

Flottweg-Werk        - 1 -        11.964
Dr.Georg Bruckmayer GmbH & Co. KG
8313 Vilsbiburg

---

VERFAHREN ZUM WASCHEN VON GRÖBEREN BOHR-
GUTPARTIKELN

---

A N S P R Ü C H E

1. Verfahren zum Waschen von gröberen Partikeln erbohrten
Gutes, das mit Hilfe einer Bohrspülung auf Ölbasis aus
der Bohrung ausgetragen wird, welche über ein Schüttelsieb od. dgl. ersten Separator für das Ausscheiden gröberer Partikel, sogenannter entsprechend groß bemessener
Cuttings, gegeben wird, wonach diesen ausgesiebten
Cuttings Dieselöl od. dgl. Aufschließmittel für das Aufschließen von die Cuttings umgebenden, aus Spülung bestehenden Hüllen beigemischt wird, worauf die derart
vorbehandelten Cuttings in einem nachfolgenden Vorgang
mittels einer Waschflüssigkeit deponierfähig gesäubert
werden, d a d u r c h   g e k e n n z e i c h n e t ,
daß die Vorbehandlung mit Dieselöl und/oder die Behandlung
mit Waschflüssigkeit in zwei aufeinanderfolgend durchlaufenen Behandlungsstrecken durchgeführt wird, deren jede
sich entlang einer Wandung eines Raumes erstreckt, die
quer zur Behandlungsstreckenrichtung bewegt wird, in
deren erster die angelieferten Cuttings mit Dieselöl
bzw. Waschflüssigkeit durchmischt werden und in deren
zweiter, darauffolgender Strecke die derart behandelten
Cuttings von der Behandlungsflüssigkeit - Dieselöl bzw.

**0136373**
11.964

Waschflüssigkeit - getrennt werden.

2. Verfahren nach Anspruch 1, d a d u r c h   g e k e n n -
z e i c h n e t , daß in die Wandung, entlang der die
Cuttings bewegt werden, eine senkrecht und/oder parallel
dazu gerichtete Vibrationsbewegung eingeleitet wird.

3. Verfahren nach Anspruch 1 und 2, d a d u r c h   g e -
k e n n z e i c h n e t , daß die in der zweiten Behandlungsstrecke abgetrennte Behandlungsflüssigkeit durch Dekantieren vom Feststoff befreit und an den Beginn der
ersten Behandlungsstrecke zurückgeliefert wird.

4. Verfahren nach Anspruch 3 , d a d u r c h   g e k e n n -
z e i c h n e t , daß die in der zweiten Behandlungsstrecke
abgetrennte, verschmutzte Waschflüssigkeit durch Mehrphasen-Dekantierung von deponierfähigen Feststoffen einerseits und von Dieselöl andererseits befreit wird, wobei
Dieselöl in die Dieselöl-Behandlungsstufe eingespeist
wird, während die Waschflüssigkeit enthaltende schwere
Flüssigkeitsphase in die erste Behandlungsstrecke des Waschvorgangs eingespeist wird.

5. Verfahren nach einem der Ansprüche 1 bis 4, d a d u r c h
g e k e n n z e i c h n e t , daß die Behandlung mit
Waschflüssigkeit in zwei aufeinanderfolgenden Streckenpaaren erfolgt, in deren erstem eine Grobsäuberung und
in deren zweitem eine Feinsäuberung der mit Dieselöl vorbehandelten Cuttings erfolgt, und daß gebrauchte Waschflüssigkeit aus dem ersten Streckenpaar durch Dekantieren
gereinigt und dem zweiten Streckenpaar zugeführt wird,
während gebrauchte Waschflüssigkeit des zweiten Streckenpaares zu dem ersten  Streckenpaar überführt wird.

6. Anlage zur Durchführung des Verfahrens nach einem der Ansprüche 1 bis 5, d a d u r c h  g e k e n n z e i c h - n e t , daß die erste der beiden Behandlungsstrecken (1, 2) in einem Raum verläuft, der durch einen um seine Längsachse umlaufend antreibbaren Mantel (3) umfaßt ist, dessen einer axialer Endbereich als Eingang (4) für die Eingabe von Cuttings ausgebildet ist, in dessen anderem axialen Endbereich ein Übertritt (5) in die zweite Behandlungsstrecke (2) vorgesehen ist und dessen Mantelwandung im übrigen flüssigkeitsdicht ausgebildet ist, und daß die zweite der beiden Behandlungsstrecken (1, 2) durch einen mit einer Vielzahl von Durchtrittsöffnungen versehenen Siebmantel (6) umgebenen Raum gebildet ist, der um seine Längsachse umlaufend antreibbar ist, in dessen einen axialen Endbereich der Übertritt (5) mündet und dessen anderer axialer Endbereich als Ausgang (7) für die Cuttings ausgebildet ist.

7. Anlage nach Anspruch 6, d a d u r c h  g e k e n n - z e i c h n e t , daß der zweite Raum den ersten Raum umgreifend ausgebildet ist.

8. Anlage nach Anspruch 7, d a d u r c h  g e k e n n - z e i c h n e t , daß der den ersten Raum umfassende Mantel (3) und der den zweiten Raum umfassende Siebmantel (6) um dieselbe Längsachse umlaufend angeordnet sind und einander derart überdecken, daß der Mantel (3) des ersten Raums achsnah angeordnet ist und der Siebmantel (6) des zweiten Raumes den Mantel (3) des ersten Raumes mit einem Abstand umgreift.

9. Anlage nach Anspruch 6, d a d u r c h  g e k e n n - z e i c h n e t , daß der Mantel (3) des ersten Raumes und der Siebmantel (6) des zweiten Raumes koaxial in Achsrichtung aufeinanderfolgend mit insoweit durchgehender Mantelfläche ausgebildet sind.

10. Anlage nach einem der Ansprüche 6 bis 9, d a d u r c h g e k e n n z e i c h n e t , daß der Mantel (3) des ersten Raumes und/oder der Siebmantel (6) des zweiten Raumes konisch oder teilkonisch ausgebildet sind bzw. ist, und zwar mit der konischen Erweiterung in Richtung von dem Eingang (4) zum Übertritt (5) bzw. vom Übertritt (5) zum Ausgang (7).

11. Anlage nach einem der Ansprüche 6 bis 10, d a d u r c h g e k e n n z e i c h n e t , daß der Mantel (3) und/ oder der Siebmantel (6) in Betriebsstellung mit schräg zur Horizontalen verlaufender Längsachse angeordnet sind bzw. ist.

12. Anlage nach einem der Ansprüche 6 bis 11, d a d u r c h g e k e n n z e i c h n e t , daß in dem von dem Mantel (3) umschlossenen ersten Raum und/oder in dem von dem Siebmantel (6) umschlossenen zweiten Raum Durchmischungs- und Fördereinrichtungen vorgesehen sind.

13. Anlage nach einem der Ansprüche 6 bis 12, d a d u r c h g e k e n n z e i c h n e t , daß innerhalb des Mantels (3) Räumwerkzeuge od. dg-. (8) für die Mischung der Cuttings mit der in diesem Raum vorhandenen Behandlungsflüssigkeit und für den Weitertransport der Cuttings zum Übertritt (5) angeordnet sind, während innerhalb des Siebmantels (6) eine Förderschnecke (9) angeordnet ist.

14. Anlage nach Anspruch 13, d a d u r c h g e k e n n z e i c h n e t , daß sich die Förderschnecke (9) zwischen dem Mantel (3) und dem Siebmantel (6) erstreckt.

15. Anlage nach Anspruch 14, d a d u r c h   g e k e n n -
    z e i c h n e t , daß der Mantel (3), der Siebmantel (6),
    das Räumwerkzeug (8) und die Förderschnecke (9) eine
    feste, um eine gemeinsame Achse umlaufende Einheit bilden, wobei die Mäntel (3, 6) vorzugsweise rohrförmige
    Zylinder sind.

16. Anlage nach einem der Ansprüche 6 bis 15, d a d u r c h
    g e k e n n z e i c h n e t , daß der die Dieselöl-Behandlung durchführenden,ein erstes Streckenpaar aufweisenden Behandlungseinrichtung (10) ein Dekanter (12) zugeordnet ist, dem die durch den Siebmantel (6) austretende und aufgefangene Flüssigkeits-Suspension aus Dieselöl
    und feineren Feststoffen zugeführt ist, dessen Feststoff-
    Ausgang (14) mit dem Ausgang (7) der Behandlungseinrichtung (10) zusammengeführt ist, während der gereinigtes
    Dieselöl abgebende Ausgang (15) mit dem Eingang (4) des
    ersten Raumes verbunden ist.

17. Anlage nach einem der Ansprüche 6 bis 16, d a d u r c h
    g e k e n n z e i c h n e t , daß der die Wasch-Behandlung
    durchführenden, ein zweites Streckenpaar aufweisenden Behandlungseinrichtung (11) ein Dekanter (13) zugeordnet
    ist, dem durch den Siebmantel (6) austretende und aufge-
    fangene Flüssigkeitssuspension aus Waschflüssigkeit, Die-
    selöl und Feststoffen zugeführt ist, dessen gereinigte
    Waschflüssigkeit abgebender Ausgang (16) mit dem Eingang
    (17) der zweiten Behandlungseinrichtung zusammengeführt
    ist.

18. Anlage nach Anspruch 17, d a d u r c h   g e k e n n -
    z e i c h n e t , daß der Dekanter (13) ein Drei-Phasen-
    Dekanter ist, dessen leichtere Flüssigkeitsphase Diesel-

Dr.Georg Bruckmayer GmbH & Co. KG

öl enthält, das dem Eingang (4) der ersten Behandlungseinrichtung (10) zugeführt ist.

19. Anlage nach einem der Ansprüche 6 bis 18, d a d u r c h
g e k e n n z e i c h n e t , daß der ersten und/oder
zweiten Behandlungseinrichtung (10, 11) eine axiale und/
oder radiale Vibrationsbewegungen hervorrufende Vibrationsgeneratoreinrichtung zugeordnet ist.

20. Anlage nach einem der Ansprüche 6 bis 19, d a d u r c h
g e k e n n z e i c h n e t, daß dem Eingang (4) des
ersten Raumes bzw. der ersten Behandlungseinrichtung
(10) ein Brechwerk (18) vorgeordnet ist.

21. Anlage nach Anspruch 20, d a d u r c h   g e k e n n -
z e i c h n e t , daß dem Brechwerk (18) ein Schüttelsieb od. dgl. (19) vorgeordnet ist, dessen Ausgang für
abgesiebtes Grobgut dem Eingang des Brechwerkes (18)
zugeführt ist, während der Ausgang für kleinere Partikel
mit dem Ausgang des Brechwerkes (18) zusammengeführt
ist.

22. Anlage nach einem der Ansprüche 6 bis 21,   d a d u r c h
g e k e n n z e i c h n e t , daß dem Siebmantel (6) eine
Säuberungseinrichtung in Form einer mit unter Druck stehendem Wasser gespeisten Spritzdüsenvorrichtung und/oder
einer Bürstenvorrichtung, insbesondere rotierend angetrieben, zugeordnet ist.

FIG.1

FIG.6

FIG.2

FIG.3

FIG.4

FIG.5

2/2

0136373

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 040 866  (T.C. MONDSHINE) * Insgesamt * | 1-22 | E 21 B  21/06 B 01 D  12/00 |
| A | WO-A-8 201 737  (HARPSOUND) * Insgesamt * | 1-22 | |
| A | EP-A-0 063 910  (T. BROADBENT & SONS) * Seiten 2,3; Figuren 1,2 * | 1-22 | |
| A | US-A-2 873 032  (R.R. HENRY) * Insgesamt * | 1-22 | |
| A | US-A-3 901 254  (M.O. STEARNS et al.) * Insgesamt * | 1-22 | RECHERCHIERTE SACHGEBIETE (Int. Cl. ³) |
| | ----- | | E 21 B |

Der vorliegende Recherchenbericht wurde für alle Patentansprüche erstellt.

| Recherchenort DEN HAAG | Abschlußdatum der Recherche 06-07-1984 | Prüfer VAN AKOLEYEN H.T.M. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82